# FASCICULE DE BREVET EUROPEEN

(11) **EP 0 947 416 B1**
(45) Date de publication et mention de la délivrance du brevet: **13.11.2002**
(21) Numéro de dépôt: 99400757.3
(22) Date de dépôt: 29.03.1999
(51) Int. Cl.: B62D 29/04

(54) **Fixation glissante d'une pièce en matière plastique sur un support**
Gleitbefestigung für ein Kunststoffteil auf ein Tragelement
Sliding fastening for a plastic element on a support

(30) Priorité: 31.03.1998 FR 9803964
(43) Date de publication de la demande: 06.10.1999
(73) Titulaire: COMPAGNIE PLASTIC OMNIUM, 69007 Lyon (FR)
(72) Inventeur: Gobled, Patrice, 01460 Nurieux (FR); Jacquemard, Claude, 01100 Oyonnax (FR); Courtois, Sébastien, 01100 Oyonnax (FR); Rossetto, Marc, 39360 Rogna (FR)
(74) Mandataire: Leszczynski, André

(56) Documents cités:
- FR-A- 2 747 091
- GB-A- 2 281 260
- US-A- 3 456 706
- US-A- 4 597 153

## Description

La présente invention concerne une pièce en matière plastique apte à être fixée de façon glissante à un support.

On sait que les pièces de carrosserie d'un véhicule automobile sont assujetties à la structure du véhicule par des fixations rapportées qui assurent leur maintien en position durant toutes les phases de la fabrication du véhicule subséquentes à leur mise en place et durant toute la durée de vie du véhicule.

On sait également que, parmi les étapes de fabrication du véhicule subséquentes à la mise en place des pièces de carrosserie, figurent l'étape de cataphorèse qui consiste à immerger dans un bain la totalité du véhicule, pièces de carrosserie comprises, puis à passer le véhicule dans un four à une température comprise entre environ 180 et 220°C de manière à traiter la structure du véhicule et toutes les parties métalliques qu'il comporte contre la corrosion, ainsi que l'étape de peinture qui comprend une phase de cuisson à une température comprise entre environ 140 et 170°C.

Ces différentes opérations sont prévues pour des pièces de carrosserie en tôle.

En revanche, les pièces de carrosserie en matière plastique supportent plus difficilement de tels traitements, notamment celui consistant en la cuisson de la peinture.

En effet, au cours de ce chauffage, les pièces en matière plastique se dilatent dans des proportions bien supérieures à celles dans lesquelles la structure du véhicule se dilate, de sorte qu'il apparaît une dilatation différentielle importante entre la structure du véhicule et les pièces de carrosserie qui y sont fixées. De ce fait, les pièces de carrosserie en matière plastique se déforment en se voilant ou en formant des ondulations qui nuisent à l'esthétique du véhicule.

De plus, des dilatations différentielles apparaissent au cours de la vie du véhicule, du fait que les pièces peuvent atteindre des températures voisines de 80°C, ce qui doit aussi être pris en compte dans la manière dont on fixe les pièces de carrosserie sur la structure du véhicule.

Enfin, un autre problème apparaît en raison du retrait que subissent les pièces en matière thermoplastique après une mise en température et dans le temps, phénomène appelé post-retrait, qui se traduit par un déplacement relatif des pièces de carrosserie par rapport à la structure du véhicule, indépendamment des phénomènes de dilatation différentielle.

Pour résoudre ces inconvénients, on utilise des fixations rapportées qui permettent le glissement relatif d'une pièce de carrosserie par rapport à la structure du véhicule. De telles fixations sont désignées "fixations glissantes".

La demande de brevet français n°96 04317, publiée sous le numéro 2 747091, décrit une telle fixation glissante, munie de lames élastiques assurant son rappel dans une position privilégiée.

Cette fixation glissante pose un certain nombre de problèmes qui sont liés à la présence desdites lames élastiques.

En effet, la position privilégiée de la fixation glissante correspond à une position d'équilibre dans laquelle les lames élastiques exercent sur la fixation des forces opposées de même amplitude. Cette position dépend par conséquent de la raideur des deux lames et peut varier d'une fixation à l'autre si la raideur des deux lames n'est pas stable en production.

De plus, la matière plastique utilisée pour réaliser la fixation glissante est de préférence résistante au fluage, ce qui la rend plutôt cassante et peu flexible, alors que les lames élastiques doivent au contraire être élastiquement déformables.

Il en résulte que pour réaliser la fixation glissante, on doit choisir une matière plastique intermédiaire qui assure un compromis entre ces deux exigences antagonistes, sauf à réaliser les lames élastiques en un matériau élastique différent du reste de la fixation glissante.

La présente invention vise à proposer une nouvelle fixation glissante qui présente les avantages d'être facile à mettre en place sur une pièce de carrosserie, et d'assurer son pré-positionnement par rapport à cette pièce pour faciliter l'engagement des organes de fixation de la pièce de carrosserie dans leur logement, sans présenter les inconvénients précités.

La présente invention a pour objet une fixation glissante d'une pièce en matière plastique comportant au moins une paroi mince, destinée à être fixée de façon glissante à un support par sa paroi mince, et comportant, dans cette paroi mince, une ouverture allongée comportant deux bords longitudinaux sensiblement parallèles au moins sur une partie de leur longueur, la fixation comprenant une entretoise séparée de la pièce, d'épaisseur supérieure à celle de la paroi mince et apte à coulisser à l'intérieur de l'ouverture entre les deux bords longitudinaux de celle-ci, ladite fixation étant caractérisée par le fait que l'entretoise comporte une partie élastiquement déformable venant en appui glissant contre la paroi mince de la pièce lorsque l'entretoise coulisse à l'intérieur de l'ouverture, la paroi mince comportant une forme d'accouplement agencée de telle sorte que, dans une position privilégiée de l'entretoise par rapport à l'ouverture, la partie déformable de l'entretoise s'accouple avec la paroi mince.

En d'autres termes, au cours du coulissement de l'entretoise dans l'ouverture, la partie élastiquement déformable s'encliquette dans la forme d'accouplement de la paroi mince, ce qui définit dans la course de l'entretoise, un point dur correspondant à la position privilégiée de l'entretoise par rapport à l'ouverture.

On comprend que la position privilégiée selon l'invention est définie comme étant la position de pré-positionnement de l'entretoise sur la pièce de carrosserie.

Selon l'invention, on entend par paroi mince, une partie de la pièce qui présente une dimension très petite par rapport à ses deux autres dimensions.

De préférence, la surface de l'entretoise en appui sur le support est suffisamment importante pour empêcher tout fluage de l'entretoise, y compris lors des montées en température de celle-ci.

On choisira cette surface en fonction des conditions souhaitées et du matériau utilisé.

Le choix d'une surface d'appui convenable permet notamment d'éviter le recours à une rondelle anti-desserrage que l'on utilise habituellement pour assurer le maintien du serrage des vis dans le cas où l'entretoise est assujettie au support à l'aide d'une vis.

Dans un mode de réalisation particulier, l'entretoise comporte des languettes pour maintenir la paroi mince dans l'épaisseur de l'entretoise et l'un des bords longitudinaux de l'ouverture comporte une ou plusieurs encoches dont la forme correspond à celle de la ou des languettes de l'entretoise, permettant la mise en place de l'entretoise dans l'ouverture.

Dans ce mode de réalisation, la position de mise en place de l'entretoise dans l'ouverture est de préférence éloignée de sa position privilégiée.

De préférence, on prévoit des languettes dissymétriques de chaque côté de l'entretoise, de manière que les encoches de l'ouverture ne permettent l'introduction de l'entretoise que dans une seule orientation dans laquelle la partie élastiquement déformable de l'entretoise et la forme d'accouplement de la paroi mince se trouvent du même côté.

Dans un mode de réalisation préféré de l'invention, la partie élastiquement déformable de l'entretoise est constituée par une patte élastique munie d'un bourrelet extérieur qui prend appui contre l'un des bords longitudinaux de l'ouverture, le bord longitudinal considéré comportant, en tant que forme d'accouplement, une rainure dans laquelle le bourrelet de la patte élastique s'engage lorsque l'entretoise occupe sa position privilégiée par rapport à l'ouverture.

Selon l'invention, la position privilégiée de l'entretoise par rapport à l'ouverture est telle que l'entretoise peut se déplacer à l'intérieur de l'ouverture dans une première position pour compenser le post-retrait de la matière thermoplastique et dans une seconde direction, opposée à la première, pour compenser les dilatations différentielles entre la pièce en matière thermoplastique et la structure du véhicule.

Les différences de dilatation étant prépondérantes, la course offerte à l'entretoise dans l'ouverture dans la seconde direction est de préférence supérieure à celle offerte dans la première direction.

Dans un mode de réalisation préféré de l'invention, la partie élastiquement déformable de l'entretoise, par exemple la patte élastique munie d'un bourrelet est issue de moulage directement avec l'entretoise.

Dans un mode de réalisation particulier de l'invention, l'entretoise comporte une tête la recouvrant complètement, plus large que l'ouverture, de manière à ne pas pouvoir la traverser, pour maintenir la paroi mince dans l'épaisseur de l'entretoise.

Dans le but de mieux faire comprendre l'invention, on va en décrire maintenant un mode de réalisation donné à titre d'exemple non limitatif en référence au dessin annexé dans lequel :
- la figure 1 représente, en perspective, une partie d'une pièce de carrosserie à fixer et une fixation selon un mode de réalisation de l'invention,
- la figure 2 est une vue de dessous de la fixation,
- la figure 3 est une vue de dessus de la fixation,
- la figure 4 est une vue de détail de la partie IV de la figure 2,
- la figure 5 est une vue en coupe selon V-V de la figure 3,
- la figure 6 est une vue en coupe selon VI-VI de la figure 3,
- la figure 7 est une vue en coupe selon VII-VII de la figure 3, et
- la figure 8 est une vue analogue à la figure 5, représentant le support.

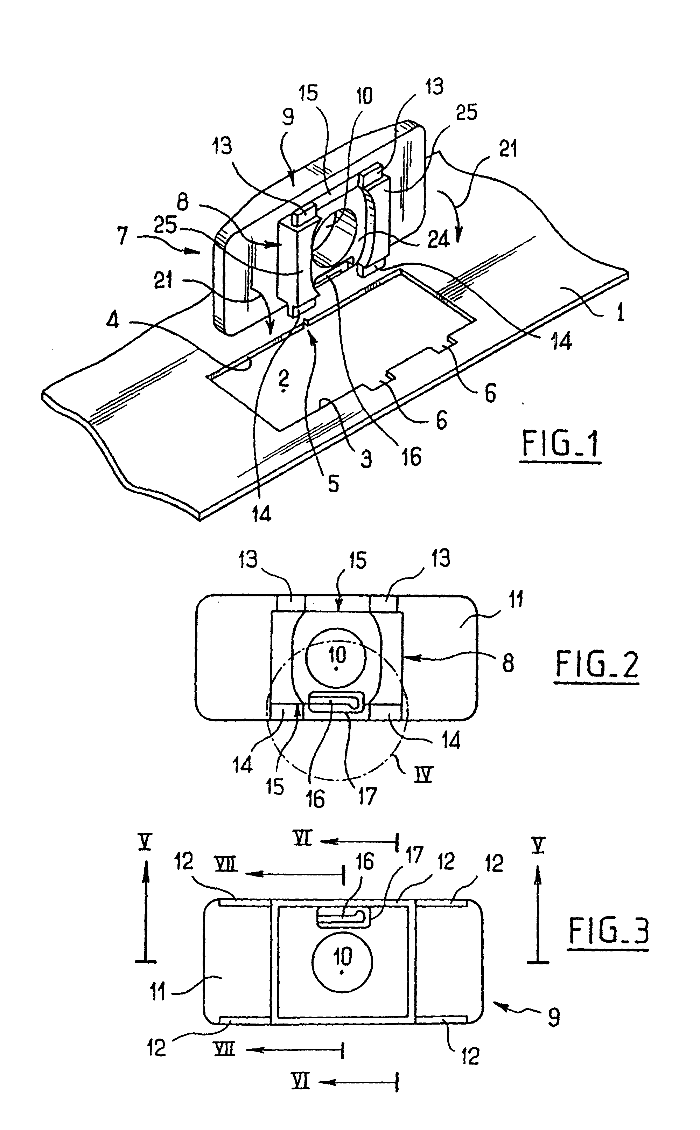

Sur la figure 1, on voit une partie d'une pièce de carrosserie 1 en matière plastique qui comporte une paroi mince destinée à être fixée de façon glissante à un support (non représenté).

Une ouverture allongée 2 de forme rectangulaire est réalisée dans cette paroi mince. Ladite ouverture est délimitée par deux bords longitudinaux 3 et 4 sensiblement parallèles.

Une rainure 5 est réalisée dans l'épaisseur d'un 4 des bords longitudinaux, tandis que deux encoches 6 sont ménagées dans l'autre 3 bord longitudinal.

Une fixation 7, destinée à être mise en place dans l'ouverture, se compose d'une partie 8 formant entretoise, dont l'épaisseur est supérieure à celle de la paroi mince, et qui est apte à coulisser à l'intérieur de l'ouverture 2 dans sa direction longitudinale et d'une tête 9 qui déborde de l'entretoise 8 tout autour de celle-ci et qui est plus large que l'ouverture 2 de manière à ne pas pouvoir la traverser.

La fixation 7 comporte un alésage central 10 perpendiculaire à son plan général et destiné à recevoir un moyen d'ancrage (non représenté), tel qu'une vis pour assujettir la fixation au support (non représenté).

Le diamètre de l'alésage 10 est choisi délibérément supérieur à celui de la vis de fixation (non représentée) pour dégager un jeu radial qui permet un réglage de positionnement de la fixation glissante sur le support, notamment dans la direction horizontale perpendiculaire à l'axe du véhicule.

La tête 9 de la fixation est constituée par une plaque 11 surmontée de nervures 12 de rigidification connues en elles-mêmes, et dont la description détaillée ne sera pas faite ici.

L'entretoise 8 présente la forme générale d'un pavé dont la largeur est très légèrement inférieure à celle de l'ouverture 2 de la paroi mince.

Deux languettes 13, respectivement 14 font saillie de chaque face latérale 15 du pavé parallèle aux bords longitudinaux de l'ouverture.

On remarque que les languettes sont petites 13 du côté des encoches et plus grandes 14 du côté de la rainure 5.

Cette différentiation a pour but de garantir que la fixation est mise en place suivant la bonne orientation dans l'ouverture.

Une patte élastique 16 parallèle aux bords longitudinaux 3 et 4 est en outre prévue entre les deux grandes languettes 14.

Cette patte élastique 16 est issue directement de moulage avec l'ensemble de la fixation, une cheminée 17 étant ménagée au-dessus de la patte élastique dans la tête 9 pour permettre le démoulage de la fixation.

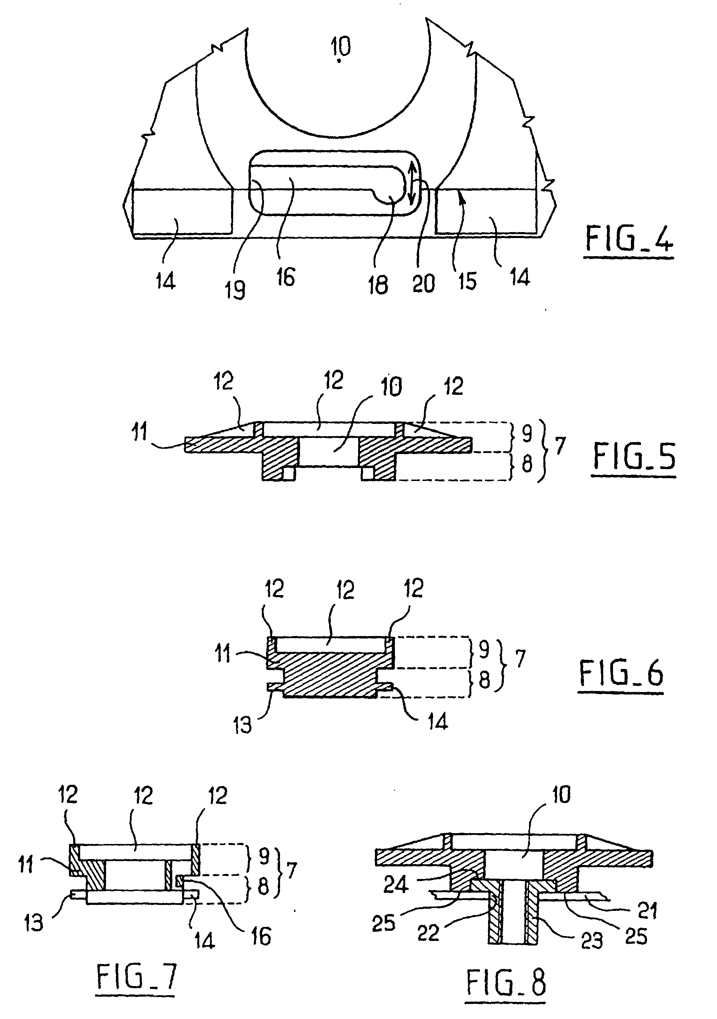

Comme on le voit plus en détail sur la figure 4, la forme de la patte élastique 16, qui comporte, à l'opposé de son extrémité 19 solidaire de l'entretoise, un bourrelet 18 en saillie de la face latérale 15, lui autorise un débattement transversal comme indiqué par la flèche 20.

Sur la face inférieure du pavé formant l'entretoise 8, on a ménagé un lamage 24 qui ne laisse subsister, de part et d'autre dudit lamage, que deux patins 25 destinés à prendre appui contre le support.

Le rôle de ce lamage sera expliqué en référence à la figure 8.

La fixation se met en place sur la paroi mince comme indiqué à la figure 1, c'est-à-dire en présentant la patte élastique 16 en regard du bord 4 de l'ouverture muni de la rainure 5 et en engageant ce bord entre la tête 9 de la pièce de fixation et les grandes languettes 14 de l'entretoise, puis en faisant pivoter la pièce de fixation autour du bord 4, comme indiqué par les flèches 21 sur la figure 1, pour amener les petites languettes 13 dans les encoches 6 ménagées dans le bord opposé 3.

Les petites languettes 13 passent ainsi en dessous de la paroi mince, et la fixation peut être coulissée pour prendre place dans l'ouverture jusqu'à ce que le bourrelet 18 de la patte élastique 16, en appui contre le bord longitudinal 4 muni de la rainure 5, immobilise la fixation par encliquetage dans la rainure 5.

On comprend que la patte élastique 16 assure ainsi le pré-positionnement de la fixation 7 par rapport à la pièce de carrosserie 1, mais que l'encliquetage du bourrelet de la patte élastique dans la rainure peut facilement céder pour permettre à la fixation de jouer son rôle de fixation glissante en cas de post-retrait de la pièce de carrosserie ou en cas de dilatation différentielle entre cette dernière et d'autres parties, notamment métalliques, du véhicule.

On a représenté à la figure 8 la fixation en position sur le support 21. Dans cet exemple, le support comporte un perçage 22 dans lequel est riveté un fût taraudé 23 destiné à recevoir la vis traversant l'alésage 10.

On voit que le fût 23 fait saillie de la surface de support et que sa partie saillante se loge dans le lamage 24 de la fixation.

La forme oblongue du lamage 24, visible à la figure 1, permet de régler le positionnement de la fixation dans la direction horizontale perpendiculaire à l'axe du véhicule.

On détermine la hauteur du lamage à partir de celle de la partie saillante du fût, en y ajoutant une cote, de l'ordre du dixième de millimètre, calculée en fonction du fluage de la matière constituant les patins de la fixation lors du serrage de la vis de manière que la fixation, après serrage, s'appuie à la fois sur ses deux patins 25 et sur le fût 23.

Il est bien entendu que le mode de réalisation qui vient d'être décrit ne présente aucun caractère limitatif, et qu'il pourra recevoir toutes modifications désirables sans sortir pour cela du cadre de l'invention.

En particulier, il est clair que le lamage 24 pourrait être éliminé si l'on n'utilisait pas de fût en saillie du support pour arrimer la vis de fixation, ce qui procurerait une plus grande surface d'appui direct de la fixation sur le support.

## Revendications

1. Fixation glissante d'une pièce en matière plastique (1) comportant au moins une paroi mince, destinée à être fixée de façon glissante à un support par sa paroi mince, et comportant, dans cette paroi mince, une ouverture (2) allongée comportant deux bords longitudinaux (3, 4) sensiblement parallèles au moins sur une partie de leur longueur, la fixation comprenant une entretoise (8) séparée de la pièce (1) d'épaisseur supérieure à celle de la paroi mince et apte à coulisser à l'intérieur de l'ouverture (2) entre les deux bords longitudinaux (3,4) de celle-ci, ladite fixation étant **caractérisée par le fait que** l'entretoise (8) comporte une partie (16) élastiquement déformable venant en appui glissant contre la paroi mince de la pièce lorsque l'entretoise (8) coulisse à l'intérieur de l'ouverture (2), la paroi mince comportant une forme d'accouplement (5) agencée de telle sorte que, dans une position privilégiée de l'entretoise par rapport à l'ouverture, la partie déformable de l'entretoise s'accouple avec la paroi mince.

2. Fixation selon la revendication 1, **caractérisée par le fait que** l'entretoise (8) comporte des languettes (13, 14) pour maintenir la paroi mince dans l'épaisseur de l'entretoise (8) et l'un (3) des bords longitudinaux de l'ouverture comporte une ou plusieurs encoches (6) dont la forme correspond à celle de la ou des languettes (13) de l'entretoise, permettant la mise en place de l'entretoise dans l'ouverture.

3. Fixation selon la revendication 2, **caractérisée par le fait que** la position de mise en place de l'entretoise (8) dans l'ouverture (2) est éloignée de sa position privilégiée.

4. Fixation selon l'une quelconque des revendications 2 et 3, **caractérisée par le fait que** les languettes (13, 14) sont dissymétriques de chaque côté de l'entretoise (8), de manière que les encoches (6) de l'ouverture ne permettent l'introduction de l'entretoise que dans une seule orientation dans laquelle la partie élastiquement déformable (16) de l'entretoise et la forme d'accouplement (5) de la paroi mince se trouvent du même côté.

5. Fixation selon l'une quelconque des revendications 1 à 4, **caractérisée par le fait que** la partie élastiquement déformable de l'entretoise (8) est constituée par une patte élastique (16) munie d'un bourrelet extérieur (18) qui prend appui contre l'un (4) des bords longitudinaux de l'ouverture (2), le bord longitudinal (4) considéré comportant, en tant que forme d'accouplement, une rainure (5) dans laquelle le bourrelet (18) de la patte élastique (16) s'engage lorsque l'entretoise (8) occupe sa position privilégiée par rapport à l'ouverture (2).

6. Fixation selon l'une quelconque des revendications 1 à 5, **caractérisée par le fait que** la position privilégiée de l'entretoise (8) par rapport à l'ouverture (2) est telle que l'entretoise (8) peut se déplacer à l'intérieur de l'ouverture (2) dans une première direction pour compenser le post-retrait de la matière thermoplastique (1) et dans une seconde direction, opposée à la première, pour compenser les dilatations différentielles entre la pièce en matière thermoplastique (1) et le support.

7. Fixation selon l'une quelconque des revendications 1 à 6, **caractérisée par le fait que** la partie élastiquement déformable (16) de l'entretoise (8) est issue de moulage directement avec l'entretoise.

8. Fixation selon l'une quelconque des revendications 1 à 7, **caractérisée par le fait que** l'entretoise (8) comporte une tête (9) la recouvrant complètement, plus large que l'ouverture (2), de manière à ne pas pouvoir la traverser, pour maintenir la paroi mince dans l'épaisseur de l'entretoise.

9. Fixation selon l'une quelconque des revendications 1 à 8, **caractérisée par le fait que** la surface de l'entretoise (8) en appui sur le support est suffisamment importante pour empêcher tout fluage de l'entretoise, y compris lors des montées en température de celle-ci.

## Claims

1. Sliding fastening for a plastic element (1) comprising at least one thin wall, intended to be fastened in a sliding manner to a support by its thin wall, and comprising, in this thin wall, an elongated opening (2) comprising two longitudinal edges (3, 4) which are substantially parallel at least over part of their length, the fastening comprising a spacer (8) separated from the element (1) by a thickness greater than that of the thin wall and capable of sliding inside the opening (2) between the two longitudinal edges (3, 4) thereof, the said fastening being **characterized in that** the spacer (8) comprises an elastically deformable part (16) bearing in a sliding manner against the thin wall of the element when the spacer (8) slides inside the opening (2), the thin wall comprising a coupling shape (5) arranged such that, in a favoured position of the spacer with respect to the opening, the deformable part of the spacer couples with the thin wall.

2. Fastening according to Claim 1, **characterized in that** the spacer (8) comprises tabs (13, 14) in order to keep the thin wall within the thickness of the spacer (8) and one (3) of the longitudinal edges of the opening comprises one or more notches (6), the shape of which corresponds to that of the tab or tabs (13) of the spacer, allowing the spacer to be placed in the opening.

3. Fastening according to Claim 2, **characterized in that** the position in which the spacer (8) is placed in the opening (2) is away from its favoured position.

4. Fastening according to either of Claims 2 and 3, **characterized in that** the tabs (13, 14) are asymmetrical on each side of the spacer (8), such that the notches (6) of the opening allow the spacer to be inserted only in a single orientation in which the elastically deformable part (16) of the spacer and the coupling shape (5) of the thin wall are on the same side.

5. Fastening according to any one of Claims 1 to 4, **characterized in that** the elastically deformable part of the spacer (8) consists of an elastic lug (16) fitted with an outer flange (18) which bears against one (4) of the longitudinal edges of the opening (2), the longitudinal edge (4) in question comprising, as a form of coupling, a groove (5) in which the flange (18) of the elastic lug (16) engages when the spacer (8) occupies its favoured position with respect to the opening (2).

6. Fastening according to any one of Claims 1 to 5, **characterized in that** the favoured position of the spacer (8) with respect to the opening (2) is such that the spacer (8) can move inside the opening (2) in a first direction to compensate for the post-shrinkage of the thermoplastic (1) and in a second direction, opposite to the first, to compensate for the differential expansions between the thermoplastic element (1) and the support.

7. Fastening according to any one of Claims 1 to 6, **characterized in that** the elastically deformable part (16) of the spacer (8) comes from direct moulding with the spacer.

8. Fastening according to any one of Claims 1 to 7, **characterized in that** the spacer (8) comprises a head (9) covering it completely, which is larger than the opening (2), so that it cannot pass through it, in order to keep the thin wall within the thickness of the spacer.

9. Fastening according to any one of Claims 1 to 8, **characterized in that** the surface of the spacer (8) bearing on the support is large enough to prevent any plastic flow of the spacer, including when its temperature rises.

## Patentansprüche

1. Gleitbefestigung eines Kunststoffteils (1), das mindestens eine dünne Wandung aufweist und bestimmt ist, gleitend mittels seiner dünnen Wandung an einem Tragteil befestigt zu werden und das in dieser dünnen Wandung eine längliche Öffnung (2) aufweist, welche zwei Längsränder (3, 4) aufweist, die im wesentlichen parallel zu zumindest einem Teil der Länge der Öffnung (2) sind, dabei weist die Befestigung eine Zwinge (8) auf, die vom Kunststoffteil (1) separat ist, die eine größere Dicke als diejenige der dünnen Wandung aufweist und die ausgelegt ist für ein Gleiten im Inneren der Öffnung (2) zwischen den beiden Längsrändern (3, 4) dieser Öffnung (2), diese Gleitbefestigung ist dadurch charakterisiert, dass die Zwinge (8) einen elastisch deformierbaren Bereich (16) hat, der in gleitende Anlage an die dünne Wandung des Kunststoffteils (1) kommt, wenn die Zwinge (8) im Inneren der Öffnung (2) gleitet, diese dünne Wandung weist ein Formteil (5) für ein Ankoppeln auf, das so ausgeführt ist, dass in einer speziellen Position der Zwinge (8) in bezug auf die Öffnung (2) der deformierbare Bereich der Zwinge (8) sich an die dünne Wandung ankoppelt.

2. Gleitbefestigung nach Anspruch 1, **dadurch gekennzeichnet, dass** die Zwinge (8) Zungen (13, 14) aufweist, um die dünne Wandung innerhalb der Dicke der Zwinge (8) zu halten, und dass einer (3) der Längsränder der Öffnung (2) eine oder mehrere Ausnehmungen (6) aufweist, deren Form derjenigen der Zunge oder der Zungen (13) der Zwinge (8) entspricht, so dass eine Anordnung der Zwinge (8) in der Öffnung ermöglicht wird.

3. Gleitbefestigung nach Anspruch 2 **dadurch gekennzeichnet, dass** die Position der Anordnung der Zwinge (8) in der Öffnung (2) entfernt ist von der speziellen Position.

4. Gleitbefestigung nach einem der Ansprüche 2 oder 3, **dadurch gekennzeichnet, dass** die Zungen (13, 14) unsymmetrisch sind zu jeder Seite der Zwinge (8), in einer Art, dass die Ausnehmungen (6) der Öffnung ein Einsetzen der Zwinge (8) nur in einer einzigen Orientierung zulassen, in welcher der elastisch deformierbare Bereich (16) der Zwinge (8) und des Formteil (5) für ein Ankoppeln der dünnen Wand sich auf derselben Seite befinden.

5. Gleitbefestigung nach einem der Ansprüche 1 bis 4, **dadurch gekennzeichnet, dass** der elastisch verformbare Bereich der Zwinge (8) gebildet ist von einem elastischen Finger (16), der mit einem äußeren Vorsprung (18) versehen ist, welcher zur Anlage kommt gegen einen (4) der Längsränder der Öffnung (2), der betreffende Längsrand (4) weist als Formteil für das Ankoppeln eine Rinne (5) auf, in die der Vorsprung (18) des elektrischen Fingers (16) eingreift, wenn die Zwinge (8) ihre spezielle Position relativ zur Öffnung (2) einnimmt.

6. Gleitbefestigung nach einem der Ansprüche 1 bis 5, **dadurch gekennzeichnet, dass** die spezielle Position der Zwinge (8) bezüglich der Öffnung (2) dergestalt ist, dass die Zwinge (8) sich im Inneren der Öffnung (2) in einer ersten Richtung verschieben kann, um ein nachträgliches Schrumpfen des thermoplastischen Materials (1) in eine zweite Richtung zu kompensieren, welche entgegengesetzt ist zur ersten Richtung, um so differentielle Ausdehnungen zwischen dem thermoplastischen Kunststoffteil (1) und dem Tragteil zu kompensieren.

7. Gleitbefestigung nach einem der Ansprüche 1 bis 6, **dadurch gekennzeichnet, dass** der elastisch deformierbare Bereich (16) der Zwinge (8) hervorgegangen ist direkt durch den Formvorgang der Zwinge (8).

8. Gleitbefestigung nach einem der Ansprüche 1 bis 7, **dadurch gekennzeichnet, dass** die Zwinge (8) einen Kopf (9) hat, der sie komplett überdeckt, der größer ist als die Öffnung (2) dergestalt, dass er nicht durch diese gelangen kann, um die dünne Wandung im Bereich der Dicke der Zwinge (8) zu halten.

9. Gleitbefestigung nach einem der Ansprüche 1 bis 8, **dadurch gekennzeichnet, dass** die sich in Anlage am Tragteil befindende Oberfläche der Zwinge (8) so ausreichend ausgebildet ist, dass jegliches Fliessen der Zwinge (8) unterbunden ist, eingeschlossen während Erhöhungen der Temperatur der Zwinge (8).
